# EUROPÄISCHE PATENTANMELDUNG

(11) **EP 2 120 180 A1**
(43) Veröffentlichungstag der Anmeldung: **18.11.2009**
(21) Anmeldenummer: 08103985.1
(22) Anmeldetag: 16.05.2008
(51) Int. Cl.: G06K 7/00

(54) **Verfahren und System zur Erkennung eines bewegten Objekts entlang eines vorbestimmten Bewegungsweges**

(71) Anmelder: Siemens Schweiz AG, 8047 Zürich (CH)
(72) Erfinder: Diethelm, Bernhard, 8854, Galgenen (CH); Schmid, Rolf, 8800, Thalwil (CH)
(74) Vertreter: Fischer, Michael

(57) **Zusammenfassung**

Der vorliegenden Erfindung liegt die Aufgabe zugrunde, ein Verfahren und ein System zur sicheren und energieoptimierten Erfassung von bewegten Objekten entlang eines vorgegebenen Bewegungsweges anzugeben, die es erlauben das bewegte Objekt auch bei vergleichsweise hohen Geschwindigkeiten sicher und mit einem möglichst gerinen Aufwand an installierten Komponenten erfassen zu können.

Diese Aufgabe wird erfindungsgemäss durch ein Verfahren und ein System (2, 2', 16) zur Erkennung eines bewegten Objekts (4) entlang eines vorbestimmten Bewegungsweges (6) gelöst, umfassend:
a) einen objektseitigen Transponder (8, 8a, 8b, 22a bis 22d) zum Aussenden einer transponder-spezifischen Information (ID) in einem ersten Modus mit einer ersten Frequenz,
b) einen streckenseitigen Transponder (C1, C3) zum Aussenden eines externen Trigger-Signals, wobei der objektseitige Transponder (8, 8a, 8b, 22a bis 22d) in Antwort auf den Empfang eines externen Trigger-Signals in einen zweiten Modus mit einer zweiten Frequenz umschaltet;
c) einer streckenseitigen Empfangseinheit (10, 10', 14) zum Empfangen der im zweiten Modus mit der zweiten Frequenz ausgesendeten transponder-spezifischen Information (ID); und
d) einer Auswerteeinheit (CPU) zum Auswerten der an der Empfangseinheit (10, 10', 14) empfangenen transponder-spezifischen Information (ID).

## Beschreibung

Die vorliegende Erfindung betrifft ein Verfahren und ein System zur Erkennung eines bewegten Objekts entlang eines vorbestimmten Bewegungsweges.

In vielen verkehrstechnischen, aber auch logistischen Anwendungen ist es für die Gewährung der Sicherung des Bewegungsweges des bewegten Objekts unerlässlich, dass die Sicherungsinstanz zumindest temporär sehr genau den Aufenthaltsort des bewegten Objektes kennt. In der Zugsicherungstechnik ist hierfür beispielsweise eine Kommunikation zwischen fahrzeug- und gleisseitig angeordneten Sicherungsanlagen vorgesehen, über die Positionsdaten des Fahrzeugs an ein Stellwerk oder ein Leitsystem gegeben werden können. Ausserdem sind dort Sicherungseinrichtungen vorgesehen, die die Belegung eines bestimmten Gleisabschnitts detektieren und so darauf schliessen, dass sich ein bestimmtes Fahrzeug in diesem Abschnitt aufhält bzw. dass ein bestimmtes Fahrzeug einen bestimmten Abschnitt gerade verlassen hat.

Weiter ist es im Bereich der Warenlogistik vorgesehen, die Waren an bestimmten für den Warentransport neuralgischen Punkten anhand von Barcodes, RFID Transpondern oder dergleichen zu erfassen. Wie auch schon das weiter oben geschilderte Beispiel gilt auch diese Erfassung dem Tracking des bewegten Objekts.

Insgesamt besteht bei diesen Erfassungstechnologien allerdings auch immer der Anspruch, dass die hierfür eingesetzten Komponenten und Verfahren einfach ausgestattet sind und mit nur vergleichsweise geringen Investitionskosten eingerichtet werden können. Zugleich ist es besonders im Bereich des Personenverkehrs unerlässlich, dass die auf diesem Wege gewonnenen Information absolut zuverlässig sind, sofern hierauf sicherheitsrelevante Entscheide für den Bewegungsweg/Fahrweg begründet werden.

Eine einfache technische Lösung zur Erfassung von bewegten Objekten stellt die RFID-Technologie dar, bei der sogenannte Aktiv-Tags Daten aussenden und empfangen können. Diese Aktiv-Tags können fahrzeug- und/oder gleisseitig angeordnet sein und ermöglichen so eine Erfassung von bewegten Objekten im Umkreis von bis zu ca. 50 m Entfernung. Problematisch ist jedoch bei diesen Aktiv-Tags häufig die eigene Energieversorgung, weil diese Aktiv-Tags in der Regel autark betrieben werden und für das aktive Senden von Daten nur ein begrenzter Energievorrat auf dem Aktiv-Tag zur Verfügung besteht. Abhilfe könnte hier die passive RFID-Technologie bieten, bei der das Aussenden von Daten mittels eines anliegenden Telepowering-Signals des Datenempfängers ausgelöst wird. Leider hat diese Technologie nur sehr begrenzte Reichweiten, die typischerweise unterhalb von etwa 50 cm liegen.

Eine weitere Möglichkeit zu einem effizienten Umgang mit der auf einem Aktiv-Tag zur Verfügung stehenden elektrischen Energie besteht in der periodischen, nicht-permanenten Aussendung der Daten von den Aktiv-Tags. Derartige Intervalle können beispielsweise im Sekunden-Bereich liegen und erlauben so die sichere Erfassung von Objekten, die sich mit Geschwingigkeiten im Bereich von einigen Metern pro Sekunde bewegen. Gerade im modernen Zugverkehr werden aber heute Geschwindigkeiten erreicht, die deutlich über 200 km/h oder 56 m/s liegen, so dass eine diskontinuierliche Aussendung von Daten mit Intervallen von mehr als Sekunde die Erfassung von bewegten Objekten innerhalb der Reichweite der Aktiv-Tags zufällig werden lassen. Eine weitere Absenkung des Intervall-Abstandes in den Bereich von Millisekunden zur Sicherstellung der Erfassung hat wiederum den Nachteil des erhöhten Energieverbrauchs auf dem Aktiv-Tag. Eine denkbare Möglichkeit zur Behebung dieses Mangels könnte in einer Verlängerung der Erfassungszone bestehen, was sich jedoch nachteilig im Hinblick auf die zu installierenden Komponenten und die Wartung und Maintenance derselben auswirken würde.

Der vorliegenden Erfindung liegt daher die Aufgabe zugrunde, ein Verfahren und ein System zur sicheren Erfassung von bewegten Objekten entlang eines vorgegebenen Bewegungsweges anzugeben, die es erlauben das bewegte Objekt auch bei vergleichsweise hohen Geschwindigkeiten sicher und mit einem möglichst gerinen Aufwand an installierten Komponenten erfassen zu können.

Diese Aufgabe wird bezüglich des Verfahren erfindungsgemäss durch ein Verfahren zur Erkennung eines bewegten Objekts entlang eines vorbestimmten Bewegungsweges gelöst, welches die nachfolgenden Verfahrensschritte umfasst:
a) Aussenden einer transponder-spezifischen Information in einem ersten Modus mit einer ersten Frequenz mittels eines auf dem bewegten Objekt angeordneten Aktiv-Transponders,
b) Aussenden einer transponder-spezifischen Information in einem zweiten Modus mit einer zweiten Frequenz in Antwort auf den Empfang eines externen Trigger-Signals am Aktiv-Transponder;
c) Empfangen der im zweiten Modus mit der zweiten Frequenz ausgesendeten transponder-spezifischen Information an einer Empfangseinheit; und
d) Auswerten der an der Empfangseinheit empfangenen transponder-spezifischen Information.

Bezüglich des Systems wird diese Aufgabe erfindungsgemäss durch ein System zur Erkennung eines bewegten Objekts entlang eines vorbestimmten Bewegungsweges gelöst, wobei das System die folgenden Komponenten umfassend:
a) einen objektseitigen Transponder zum Aussenden einer transponder-spezifischen Information in einem ersten Modus mit einer ersten Frequenz,
b) einen streckenseitigen Transponder zum Aussenden eines externen Trigger-Signals, wobei der objektseitige Transponder in Antwort auf den Empfang eines externen Trigger-Signals in einen zweiten Modus mit einer zweiten Frequenz umschaltet;
c) einer streckenseitigen Empfangseinheit zum Empfangen der im zweiten Modus mit der zweiten Frequenz ausgesendeten transponder-spezifischen Information; und
d) einer Auswerteeinheit zum Auswerten der an der Empfangseinheit empfangenen transponder-spezifischen Information.

Auf diese Weise sind ein besonders sparsamer Umgang mit der auf dem Aktiv-Tag zur Verfügung stehenden Energie und eine ausreichend hohe Sendefrequenz zur Erfassung der bewegten Objekte auch bei hoher Geschwindigkeit erzielbar. Dabei kann die zweite Frequenz in geeigneter Weise an die Geschwindigkeit des bewegten Objekts und die Reichweite der Empfangszone angepasst werden, da die Erhöhung der Sendefrequenz ja nur für die sehr kurze Zeitdauer der Durchquerung der Empfangszone andauern muss.

Um die Zurückschaltung in den sparsameren ersten Modus automatisch vornehmen zu können, sieht es eine Weiterbildung der vorliegenden Erfindung vor, den Aktiv-Transponder mit einem Fernbleiben des externen Trigger-Signals in den ersten Modus zu schalten. Mit anderen Worten gesagt bedeutet dies, dass der Aktiv-Transponder immer dann im ersten Modus betrieben wird, wenn er kein externes Trigger-Signal empfängt. Daher kann mit dem externen Trigger-Signal eine Art "Signalraum" erzeugt werden, innerhalb dessen der Aktiv-Transponder im zweiten Modus betrieben wird. Auf diese Weise kann somit in zweckmässiger Ausgestaltung der Erfindung mittels der Reichweite des externen Trigger-Signals der maximale Rahmen für eine Erfassungszone definiert werden.

In Abweichung davon kann auch mittels der Reichweite des externen Trigger-Signals eine Umschaltzone realisiert werden, so dass auf beiden Seiten einer Erfassungszone jeweils eine Umschaltzone realisiert werden kann. Auf diese Weise ist es möglich, eine richtungsabhängige Erfassung zu erzielen, indem die erste Umschaltzone, in die der Aktiv-Transponder eindringt, in Richtung der anderen Umschaltzone schauend die Fahrtrichtung angibt.

In einer weiteren vorteilhaften Ausgestaltung der Erfindung kann das Umschalten auf den zweiten Modus auch die Anhebung der Sendeleistung umfassen, um sicher stellen zu können, dass die zu übertragende Information mit einem besonders guten Signal/Rausch-Verhältnis an der streckenseitigen Empfangseinheit eintrifft.

Vorteilhafte Ausgestaltungen der Erfindung sind in weiteren Ansprüchen angegeben.

Bevorzugte Ausführungsbeispiele der vorliegenden Erfindung werden nachfolgend anhand der Zeichnung näher erläutert. Dabei zeigen:
- Figur 1: in schematischer Ansicht einen ersten prinzipiellen Aufbau eines Systems zur Erkennung eines Schienenfahrzeugs;
- Figur 2: in schematischer Ansicht einen zweiten prinzipiellen Aufbau eines Systems zur Erkennung eines Schienenfahrzeug;
- Figur 3: in schematischer Ansicht eine weitere Ausgestaltung des ersten prinzipiellen Aufbaus; und
- Figur 4: in schematischer Ansicht ein Kommunikationsschema eines Aktiv-Tags mit einem zugehörigen Kontroller.

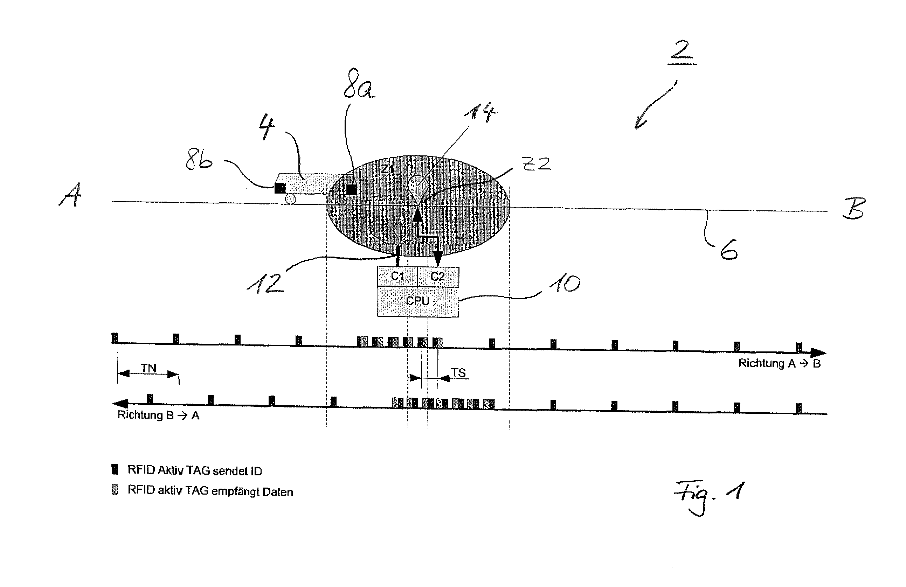

Figur 1 zeigt in schematischer Ansicht einen ersten prinzipiellen Aufbau eines Systems 2 zur Erkennung eines Schienenfahrzeugs 4. Das Schienenfahrzeug 4 bewegt sich dabei entlang eines Schienenweges 6 von einem Ort A zu einem Ort B. Auf dem Schienenfahrzeug 4 ist mindestens ein Aktiv-Transponder 8 angeordnet. Vorliegend sind hier jeweils an der Spitze und am Ende des Schienenfahrzeugs 4 Aktiv-Transponder 8a bzw. 8b angeordnet. Gleisnah, hier vorliegend im Gleisbett des Schienenweges 6, ist eine Transponder-Einheit 10 angeordnet, die einen ersten Wireless-Controller C1 mit einer Streuantenne 12, einen zweiten Wireless-Controller C2 mit einer Richtantenne 14 und eine Kontrolleinheit CPU zur Steuerung und Erfassung der Signale der beiden Wireless-Controller C1, C2 aufweist. Mit der Streuantenne 12 wird dabei eine Weckzone Z1 aufgespannt, innerhalb der der fahrzeugseitige Aktiv-Transponder 8a das von der Streuantenne 12 ausgesendete Signal empfangen kann. Demgegenüber wird mit der Richtantenne 14 eine Erfassungszone Z2 generiert, innerhalb derer die von dem Aktiv-Transponder 8a übermittelten Daten an der Transponder-Einheit 10 empfangen und optional auch Daten von der Transponder-Einheit 10 auf den Aktiv-Transponder 8a übertragen werden können.

Bei der Fahrt des Schienenfahrzeugs 4 von Ort A nach Ort B sendet der Aktiv-Transponder 8a seine transponderspezifischen Daten defaultmässig in einem Energiesparmodus mit einer ersten zyklischen Wiederholrate TN von beispielsweise 2 Sekunden und einer Reichweite von 10 bis 100 Metern. Typischerweise kann die Wiederholrate TN im Bereich von 0,5 bis 20 Sekunden liegen und ist im wesentlichen abhängig von der auf dem Aktiv-Transponder 8a zur Verfügung stehenden elektrischen Energie. In der gezeigten Darstellung gemäss Figur 1 hat sich das Schienenfahrzeug 4 nun gerade in die Weckzone Z1 begeben. Der fahrzeugseitige Aktiv-Transponder 8a empfängt nun die mit der Streuantenne 12 ausgesendeten Signale (Wecksignale) und schaltet in Antwort auf den Empfang dieser sogenannten Wecksignale in einen Sendemodus mit einer zweiten zyklischen Wiederholrate TS von beispielsweise 50 Millisekunden um. Grundsätzlich kann diese zweite zyklische Wiederholrate TS ebenfalls einen Bereich von typischerweise 1 bis 500 ms umfassen, wobei die für die jeweilige Realisierung gewählte zweite zyklische Wiederholrate TS im wesentlichen von der gefahrenen oder projektierten Maximalgeschwindigkeit und der Weite der Erfassungszone Z2 abhängt. Beispielhaft sei nochmals auf eine projektierte Maximalgeschwindigkeit von 200 km/h verwiesen, was einer zweiten zyklischen Wiederholrate von beispielsweise 50 ms einer Zugbewegung von rund 3 Metern entspricht. Dementsprechend sollte die Erfassungszone Z2 beispielsweise eine Weite von rund 10 Metern aufweisen, damit der Aktiv-Transponder 8a während der Durchquerung dieser Erfassungszone Z2 seine transponderspezifischen Daten mindestens dreimal sendet. Diese vorstehenden Angaben sollen jedoch nur beispielhaften Charakter haben und können in ihren jeweiligen Realisierung in Anpassung an die herrschenden Randbedingungen davon zum Teil deutlich abweichen.

Mit dem Eintritt des Aktiv-Tranponders 8a in die Weckzone Z1 wird damit der Aktiv-Transponder 8a quasi durch die Wecksignale der Streuantenne 12 dahingehend konfiguriert, dass die zyklische Wiederholrate drastisch reduziert wird. Der die Streuantenne 12 beaufschlagende Wireless-Controller C1 wird dabei von der Kontrolleinheit CPU gesteuert. Die Umschaltung in den Sendemodus mit der zweiten zyklischen Wiederholrate TS verbraucht nun auf dem Aktiv-Transponder 8a erheblich mehr elektrische Energie. Dafür wird der Aktiv-Transponder 8a aber aufgrund der erhöhten Sendefrequenz seiner transponder-spezifischen Daten ganz sicher innerhalb der Erfassungszone mittels des zweiten Wireless-Controllers C2 und der ihm zugeordneten Richtantenne 14 erfasst. Zugleich kann der Aktiv-Transponder 8a auch noch mit Informationen aus der Transponder-Einheit 10 beschrieben werden. Aufgrund der vergleichsweise kleinen und relativ scharf begrenzten Erfassungszone Z2 können nun auch mehrere Aktiv-Transponder 8a, 8b in der in der Erfassungszone Z2 eintreffenden Reihenfolge erfasst werden.

Im vorliegenden Ausführungsbeispiel erkennt nun die Kontrolleinheit CPU anhand der am Wireless-Controller C2 eingetroffenen transponder-spezifischen Daten eine eindeutige Transponder-ID und konfiguriert den Aktiv-Transponder 8a über den Wireless-Controller C1 wieder zurück in den Energiesparmodus mit der ersten zyklischen Wiederholrate TN. Alternativ ist es natürlich auch denkbar, dass der Aktiv-Transponder 8a automatisch dann aus dem Sendemodus in den Energiesparmodus zurückkehrt, wenn der Aktiv-Transponder 8a die Weckzone Z1 verlässt und folglich keine Wecksignale mehr empfangen kann. Weiter wäre es möglich neben der Anhebung der zyklischen Wiederholdauer von TN nach TS auch die Sendeleistung des Aktiv-Transponders 8a zu steigern, um noch besser den sicheren Empfang der transponder-spezifischen Daten an der Richtantenne 14 bewerkstelligen zu können.

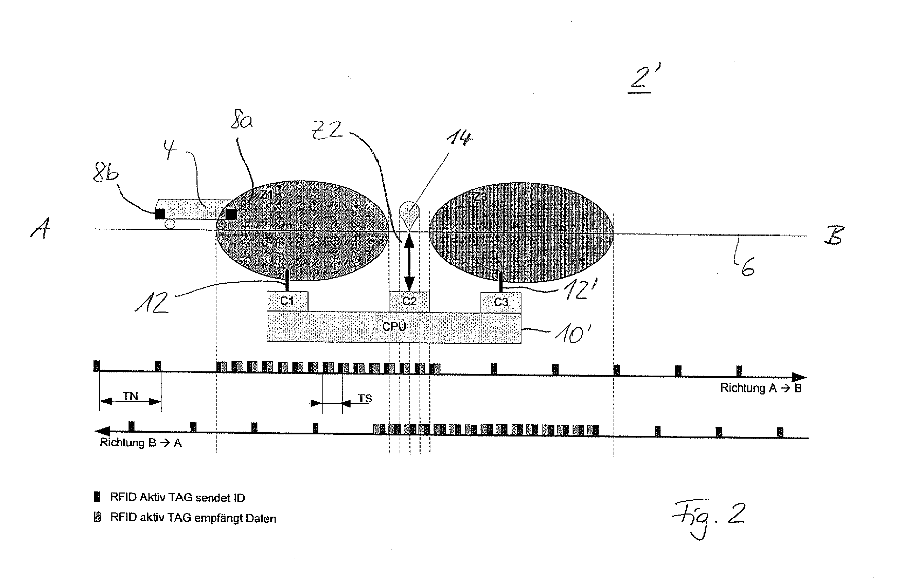

In Figur 2 ist in schematischer Ansicht ein gegenüber dem System 2 geringfügig modifiziertes System 2' zur Erfassung der fahrzeugseitigen Aktiv-Transponder 8, 8a, 8b dargestellt. Abweichend gegenüber Figur 1 ist das Vorhandensein der ersten Weckzone Z1 und einer zusätzlichen zweiten Weckzone Z3, zwischen denen sich die Erfassungszone Z2 befindet (wobei sich die Zone Z1, Z2 und Z3 auch anders als dargestellt überlappen können). Aus diesem Grunde weist eine geringfügig modifizierte Transponder-Einheit 10' einen zusätzlichen Wireless-Controller C3 auf, der mit einer zusätzlichen Streuantenne 12' gekoppelt ist. Fährt nun das Schienenfahrzeug 4 mit seinem frontseitigen Aktiv-Transponder 8a in die erste Weckzone Z1, wie in Figur 2 dargestellt, empfängt der Transponder 8a die mittels der Streuantenne 12 ausgesendeten Signale und schaltet aus dem Energiesparmodus in den Sendemodus (wie weiter oben zu Figur 1 beschrieben). Der Wireless-Kontroller C1 ist nun zusätzlich noch ertüchtigt, die Anwesenheit des Aktiv-Transponders 8a in der Weckzone Z1 zu detektieren. Hierbei reicht es auch, dass der Wireless-Kontroller C1 nur die blosse Anwesenheit eines Aktiv-Transponders 8a detektiert. Mit der nachfolgenden Erfassung des Aktiv-Transponders 8a in der Erfassungszone Z2 ist damit nicht nur die Identität des Aktiv-Transponders 8a feststellbar, sondern auch die im Schienenverkehr besonders wichtige Information der Bewegungsrichtung des Schienenfahrzeugs 4. Im vorliegenden Fall kann die Transpondereinheit 10' auf diese Weise feststellen, dass sich das Schienenfahrzeug 4 von Ort A nach Ort B bewegt. Hätte umgekehrt zunächst die zweite Weckzone Z3 angesprochen, wäre die Transpondereinheit 10' richtigerweise zu dem umgekehrten Schluss gekommen.

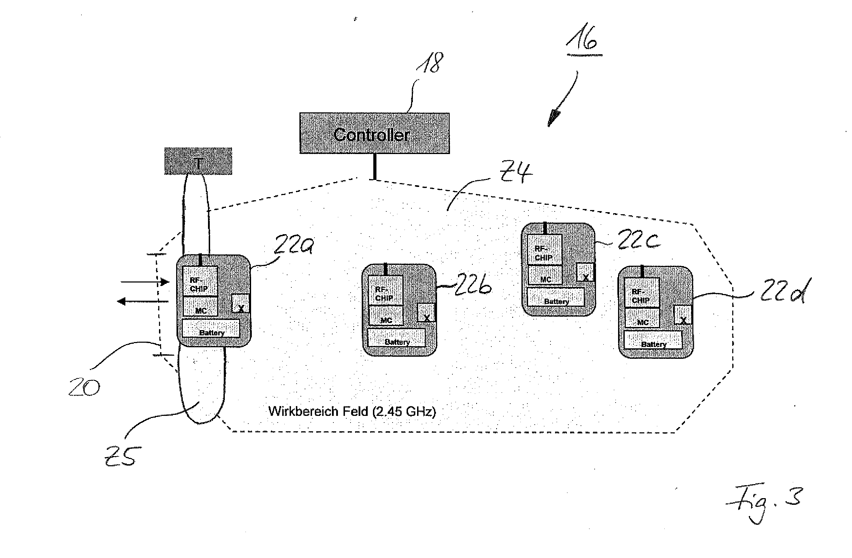

Die Figur 3 zeigt nun ein weiteres System 16 zur Erkennung von bewegten Objekten, die in der Darstellung gemäss Figur 3 in Form von Aktiv-Tags 22a bis 22d dargestellt sind. Diese Aktiv-Tags 22a bis 22d befindet sich in einer von einem Wireless-Kontroller 18 erzeugten Weckzone Z4 (z.B. 2,45 GHz Fernbereich) und haben in den Sendemodus umgeschaltet. Der Wireless-Controller 18 erkennt, dass sich in der Weckzone Z4 vier Aktiv-Tags 22a bis 22d befinden. Bewegt sich nun einer dieser Aktiv-Tags auf eine neue Zone zu, beispielsweise der Aktiv-Tag 22a durch Eintreten in einen neuen Bereich durch Passieren eines Gates 20 (physikalisch vorhanden oder auch nur virtuell vorhanden), so ist diesem Gate 20 eine im Nahbereich wirksame Erfassungszone Z5 zugeordnet, die von einer Magnetspule T erzeugt wird, beispielsweise basierend auf einer Frequenz von 13,5 MHz Nahbereich. Der Eintritt des Aktiv-Tags 22a in diese Erfassungszone Z5 kann nun den Aktiv-Tag 22a dazu veranlassen, seine transponder-spezifischen Daten ID nach einem vorbestimmten Muster zu senden, z.B. dreimal zeitlich sehr kurz hintereinander. Der Wireless-Controller 18 empfängt diese transponder-spezifischen Daten ID und weiss nun ganz genau, welches der bewegten Objekte das Gate 20 passiert hat. Anschliessend kann das Aktiv-Tag 22a mit dem Verlassen von Weckzone Z4 und Erfassungszone Z5 wieder in den Energiesparmodus zurückgeschaltet werden. Eine einfache Anwendung für diese Lösung kann beispielsweise auch auf einem Ablaufbahnhof für Güterzüge gesehen werden, wo auf diese Weise die Reihefolge von Güterwaggons drahtlos erfasst werden kann.

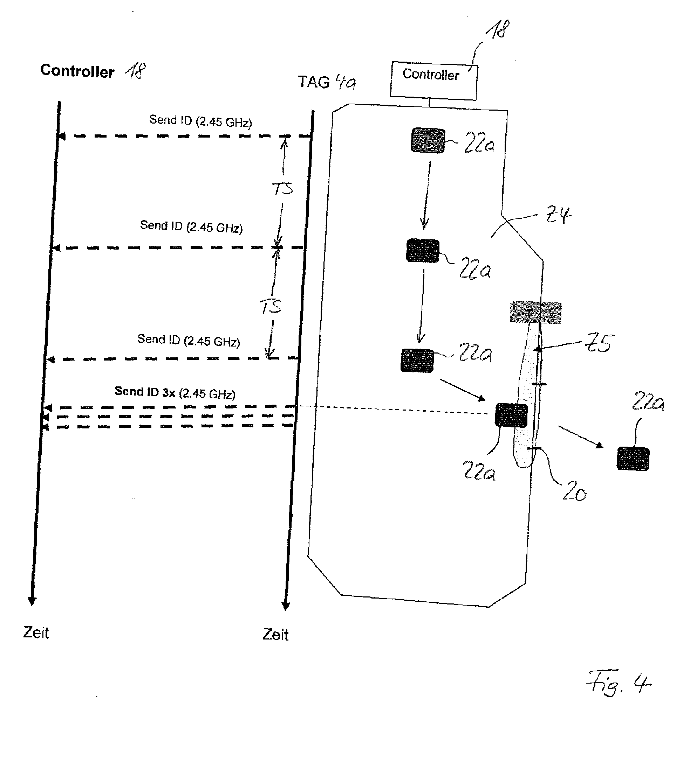

Figur 4 zeigt nun die Kommunikation während der Bewegung des Aktiv-Tags 22a durch das Gate 20. Bereits in der Weckzone Z4 sendet das Aktiv-Tag 22a nun mit der zweiten zyklischen Wiederholrate TS. Begibt sich das Aktiv-Tag 22a dann in die Erfassungszone Z5, sendet es seine transponder-spezifischen Daten ID dreimal mit einer gegenüber TS deutlich kürzeren Wiederholrate. Der Wireless-Kontroller 18 erfasst diese schnell wiederholten Sendungen und ordnet sie dem zugehörigen Aktiv-Tag 22a zu. Der Wireless-Kontroller 18 schliesst so darauf, dass der Aktiv-Tag 22a zumindest in die Erfassungszone Z5 eingedrungen ist. Mit dem Verlassen der Erfassungszone Z4 beim Durchtritt durch das Gate 20 schaltet der Aktiv-Tag 22a nun auch wieder in den Energiesparmodus und der Wireless-Kontroller 18 empfängt die nächste Ausstrahlung der transponder-spezifischen Information ID gar nicht mehr, wie hier in Figur 4 dargestellt oder alternativ auch so spät, dass er ganz sicher schliessen kann, dass der Aktiv-Tag 22a die Weckzone Z4 wieder verlassen hat.

Eine weitere Ausgestaltung, die nur geringfügung gegenüber der Variante gemäss Figur 3 abweicht, kann darin bestehen, dass die vorstehend als Weckzone Z4 bezeichnete Zone nur ausgebildet ist, die Anwesenheit der Aktiv-Tags 22a bis 22d zu erfassen, ohne deren Wiederholrate auf die zweite zyklische Wiederholrate TS heraufzusetzen. Erst wenn sich der Aktiv-Tag in die Erfassungszone Z5 begibt, schaltet sich der Aktiv-Tag in den zweiten Modus mit der höheren Wiederholrate, die wie in den Figuren 3 und 4 gezeigt auch nur in einem einmaligen Senden einer kurzen Reihe von transponderspezifischen Informationen ID besteht (vgl. Figur 4, dreimaliges Senden der ID in sehr kurzem Abstand).

Die in der Figur 4 gezeigte Bewegung des Aktiv-Tags 22a ist beispielhaft für die Fahrt eine Schienenfahrzeugs über eine Weiche, die sich in Ablenkstellung befindet. Aufgrund der Vielzahl von Anwendungsmöglichkeiten ist dieses Beispiel aber wirklich nur exemplarisch zu sehen. Beispielhaft kann auch die Sicherung einer Person gesehen werden, die mit einem Aktiv-Tag 22a ausgerüstet. Bewegt sich diese Person beispielsweise in einen geschützten Arbeitsbereich einer Maschine, kann die Maschine mit Eintritt des Aktiv-Tags 22a in die Erfassungszone sofort gestoppt werden. Dabei kann dieser Arbeitsbereich beispielsweise durch ein verlegtes Leckkabel statisch vorgegeben sein. Andererseits ist es aber auch möglich, derartige Erfassungszone an den Extremitäten der Maschine anzubringen, so dass die Maschine beispielsweise nicht nur dann ausschaltet, wenn sich Aktiv-Tag 22a selbst in den geschützten Arbeitsbereich begibt, sondern sich beispielsweise ein Maschinenarm dem Aktiv-Tag 22a annähert, also mit anderen Worten gesprochen, wenn sich die Erfassungszone auf den Aktiv-Tag (gefährlich) zubewegt. Der Begriff des vorbestimmten Bewegungsweges ist daher grosszügig auszulegen und kann beispielsweise auch alle Wege(Räume) mitabdecken, die die Person im Umfeld des Arbeitsbereichs oder sogar im Arbeitsbereich der Maschine machen kann.

## Patentansprüche

1. Verfahren zur Erkennung eines bewegten Objekts (4) entlang eines vorbestimmten Bewegungsweges (6), umfassend die nachfolgenden Verfahrensschritte:
a) Aussenden einer transponder-spezifischen Information (ID) in einem ersten Modus mit einer ersten Frequenz mittels eines auf dem bewegten Objekt (4) angeordneten Aktiv-Transponders (8, 8a, 8b, 22a bis 22d)
b) Aussenden der transponder-spezifischen Information (ID) in einem zweiten Modus mit einer zweiten Frequenz in Antwort auf den Empfang eines externen Trigger-Signals am Aktiv-Transponder (8, 8a, 8b, 22a bis 22d);
c) Empfangen der im zweiten Modus mit der zweiten Frequenz ausgesendeten transponder-spezifischen Information (ID) an einer Empfangseinheit (10, 10'); und
d) Auswerten der an der Empfangseinheit (10, 10') empfangenen transponder-spezifischen Information (ID).

2. Verfahren nach Anspruch 1,
**dadurch gekennzeichnet, dass** der Aktiv-Transponder (8, 8a, 8b, 22a bis 22d) mit einem Fernbleiben des externen Trigger-Signals in den ersten Modus schaltet.

3. Verfahren nach Anspruch 1 oder 2,
**dadurch gekennzeichnet, dass** mittels der Reichweite des externen Trigger-Signals eine Erfassungszone (Z2) definiert wird.

4. Verfahren nach Anspruch 1,
**dadurch gekennzeichnet, dass** mittels der Reichweite des externen Trigger-Signals eine Umschaltzone (Z1, Z3) realisiert wird.

5. Verfahren nach Anspruch 4,
**dadurch gekennzeichnet, dass** auf beiden Seiten einer Erfassungszone (Z2) jeweils eine Umschaltzone (Z1, Z3) realisiert wird.

6. Verfahren nach einem der Ansprüche 1 bis 5,
**dadurch gekennzeichnet, dass** das Umschalten auf den zweiten Modus auch die Anhebung der Sendeleistung umfasst.

7. System (2, 2', 16) zur Erkennung eines bewegten Objekts (4) entlang eines vorbestimmten Bewegungsweges (6), umfassend:
a) einen objektseitigen Transponder (8, 8a, 8b, 22a bis 22d) zum Aussenden einer transponder-spezifischen Information (ID) in einem ersten Modus mit einer ersten Frequenz,
b) einen streckenseitigen Transponder (C1, C3) zum Aussenden eines externen Trigger-Signals, wobei der objektseitige Transponder (8, 8a, 8b, 22a bis 22d) in Antwort auf den Empfang eines externen Trigger-Signals in einen zweiten Modus mit einer zweiten Frequenz umschaltet;
c) einer streckenseitigen Empfangseinheit (10, 10', 14) zum Empfangen der im zweiten Modus mit der zweiten Frequenz ausgesendeten transponder-spezifischen Information (ID); und
d) einer Auswerteeinheit (CPU) zum Auswerten der an der Empfangseinheit (10, 10', 14) empfangenen transponderspezifischen Information (ID).

8. System nach Anspruch 7,
**dadurch gekennzeichnet, dass** der objektseitige Transponder (8, 8a, 8b, 22a bis 22d) mit einem Fernbleiben des externen Trigger-Signals in den ersten Modus schaltet.

9. System nach Anspruch 7 oder 8,
**dadurch gekennzeichnet, dass** mittels der Reichweite des externen Trigger-Signals eine Erfassungszone (Z2) definiert wird.

10. System nach Anspruch 7,
**dadurch gekennzeichnet, dass** mittels der Reichweite des externen Trigger-Signals eine Umschaltzone (Z1, Z3) realisiert wird.

11. System nach Anspruch 10,
**dadurch gekennzeichnet, dass** auf beiden Seiten einer Erfassungszone (Z2) jeweils eine Umschaltzone (Z1, Z3) realisiert wird.

12. System nach einem der Ansprüche 7 bis 11,
**dadurch gekennzeichnet, dass** das Umschalten auf den zweiten Modus auch die Anhebung der Sendeleistung umfasst.
